# EUROPEAN PATENT APPLICATION

(11) **EP 1 184 603 A2**
(43) Date of publication of application: **06.03.2002**
(21) Application number: 01121165.3
(22) Date of filing: 04.09.2001
(51) Int. Cl.: F16H 61/00

(54) **Variable speed control apparatus for automotive vehicles**

(30) Priority: 04.09.2000 JP 2000266673
(71) Applicant: BANDO CHEMICAL INDUSTRIES, LTD., Kobe-shi, Hyogo (JP)
(72) Inventor: Miyata, Hirofumi, Bando Chemical Industries, Ltd., Kobe-shi, Hyogo 652-0883 (JP)
(74) Representative: Zinnecker, Armin, Dipl.-Ing.

(57) **Abstract**

The variable speed shifting of an infinitely variable speed transmission T mounted on a motor cycle is carried out by a small-sized control motor **54** and the infinitely variable speed transmission T can be shifted also to a finite variable speed mode for satisfying the likes and needs of a rider. More specifically, movable sheaves **13** and **18** of driving and driven pulleys **11** and **16** comprised of variable speed pulleys are driven by cam mechanisms **30** and **40** interlocked by a linkage mechanism **49**. The control motor **54** for operating the linkage mechanism **49** and a controller **56** for controlling the control motor **54** are provided. Based on a control signal from a shift control switch **59** which is operated by the rider of the motor cycle, the controller **56** allows the variable speed mode of the infinitely variable speed transmission T to shift between two different modes, i.e., a semi-automatic mode in which the variable speed ratio of the infinitely variable speed transmission T is shifted to a selected one of a plurality of preset variable speed ratios and a full-automatic mode in which the variable speed ratio is varied infinitely.

## Description

### BACKGROUND OF THE INVENTION

### TECHNICAL FIELD OF THE INVENTION

The present invention relates to a variable speed control apparatus for automotive vehicles having a belt infinitely variable speed transmission disposed in a power transmission line between an on-vehicle engine and a driving wheel.

### BACKGROUND ART

A conventional belt infinitely variable speed transmission has been known in the art which comprises a variable speed pulley mechanism. The variable speed pulley mechanism includes variable speed pulleys and a V-belt. Each variable speed pulley has a stationary and a movable sheave. The stationary and movable sheaves of one of the variable speed pulleys are positioned on one of a pair of rotational shafts disposed in parallel with each other, whereas the stationary and movable sheaves of the other variable speed pulley are positioned on the other rotational shaft. More specifically, the stationary sheave is rigidly fixed to the rotational shaft in such a manner that it is rotatable together with the rotational shaft but not slidable thereover, whereas the movable shaft, which is disposed face to face with the stationary sheave so as to define a vee-shaped belt groove therebetween, is supported on the rotational shaft in such a manner that it is not only rotatable together with the rotational shaft but also slidable thereover. The V-belt is wound between the variable speed pulleys. Each variable speed pulley is opened and closed by the movement of the movable sheave in the shaft direction, thereby making its effective radius with respect to the V-belt variable, and the variable speed ratio between the rotational shafts is changed.

The applicant of the present invention proposed, as an example of the belt infinitely variable speed transmission, a belt infinitely variable speed transmission of the cam type in which movable sheaves of driving and driven pulleys comprised of variable speed pulleys are driven by respective cam mechanisms and rotary cams of the cam mechanisms are interlocked together by a linkage mechanism (see for example Japanese Unexamined Patent Gazette No. H11-336863). This proposed example provides advantages such as less operation load for variable speed ratio shifting and quick variable speed operation.

Apart from the above, the transmissions of nowadays generally mounted on motor cycles with an engine of small displacement volume, such as motor scooter and so-called "mini-motorbike", are belt infinitely variable speed transmissions of the weight roller type. Such a weight roller type infinitely variable speed transmission has a weight roller which moves by centrifugal force, and a movable sheave of a variable speed pulley is driven by the movement of the weight roller for variable speed.

However, such a belt infinitely variable speed transmission of the weight roller type unadvantageously exhibits the following variable speed characteristics. That is, the number of engine revolutions increases with the variable speed ratio remaining in the Lo state. When the engine revolution number reaches a given number of engine revolutions, the variable speed ratio shifts from the Lo state to the Hi state to increase the vehicle speed, with the rpm kept substantially constant. Because of this, it is impossible to make changes in variable speed ratio over a wide range of engine revolutions. In such an infinitely variable speed transmission, only variable speed of two ranges is practically available.

If, instead of using a weight roller, the opening and closing of variable speed pulleys is performed by an electric motor, this makes it possible to freely make changes in variable speed ratio, regardless of the number of engine revolutions. It is therefore possible to operate an infinitely variable speed transmission by selecting a wide range of variable speed ratios, and it is further possible to improve, by making good utilization of variable speed ratios, the accelerability, cost of fuel, and driving feeling of motor cycles.

In such a case, however, the load for variable speed shifting is large, therefore giving rise to the requirement for the provision of a large-size motor to perform quick variable speed shifting.

For the case of motor cycles, their vehicle weight is relatively light, which is advantageous for sports traveling et cetera. If, in addition to the normal control in which the variable speed ratio of an infinitely variable speed transmission is automatically varied infinitely, a plurality of predetermined variable speed ratios are set from the variable speed ratio range of the infinitely variable speed transmission for variable speed ratio selective shifting for the purpose of sports traveling, this makes it possible to use a finitely variable speed transmission as if it were an infinitely variable speed transmission. This provides better driving convenience for sports traveling et cetera, thereby satisfying the likes of a driver.

Accordingly, an object of the present invention is to satisfy the likes and needs of a driver by contriving designs not only for an infinitely variable speed transmission mounted on an automotive vehicle such as a motor cycle but also for variable speed control so that the variable speed shifting of the infinitely variable speed transmission is carried out by a small-sized motor and, in addition, the infinitely variable speed transmission is shifted to other than the infinitely variable speed mode (i.e., the finite variable speed mode) and can be used in such a mode.

### SUMMARY OF THE INVENTION

In order to accomplish the above-stated object, in the present invention attention is directed to the fact that the belt infinitely variable speed transmission of the cam type of the foregoing proposal example is small in shift operation force of the variable speed ratio. Such an infinitely variable speed transmission is mounted on an automotive vehicle such as a motor cycle and the variable speed mode by the infinitely variable speed transmission can be shifted between two modes, i.e., a semi- and a full-automatic mode.

More specifically, the present invention provides a variable speed control apparatus for an automotive vehicle, comprising: an infinitely variable speed transmission disposed in a power transmission line en route from an on-vehicle engine to a driving wheel; a control motor, implemented by an electric motor, for shifting the variable speed ratio of the infinitely variable speed transmission; a control means for controlling the control motor; and a shift control switch which is operated by a driver of the vehicle.

The infinitely variable speed transmission includes: an input shaft drivingly connected to the engine; an output shaft drivingly connected to the driving wheel; and a variable speed pulley mechanism having: a driving and driven pulleys comprised of a pair of variable speed pulleys which are arranged and supported on the input shaft and on the output shaft, respectively, wherein stationary and movable sheaves of the driving pulley are reversedly positioned to stationary and movable sheaves of the driven pulley; a V-belt wound between the driving and driven pulleys; a driving side and driven side cam mechanisms disposed on the rear face sides of the movable sheaves of the pulleys and having rotary cams relatively rotatably connected to the movable sheaves and stationary cams which are brought into cam contact with the rotary cams wherein a variable speed cam face is formed in one of the rotary and stationary cams and the other cam serves as a cam follower which is brought into contact with the variable speed cam face and wherein the belt contact diameter of each of the pulleys is varied by moving the movable sheave toward and away from the stationary sheave disposed face to face with the movable sheave by relative rotary motion of the rotary and stationary cams; a linkage mechanism for interlocking the cam mechanisms so that the belt contact diameters of the pulleys are varied in opposite directions to cause the pulley ratio between the pulleys to vary; and a tension mechanism for pressing, through a tension pulley, one of belt spans of the V-belt between the pulleys that becomes a slack side span when engine output power is transmitted toward the driving wheel at a tension greater than a tension produced in the slack side span correspondingly to the pulley ratio between the pulleys, wherein the V-belt exerts respective pressing forces to press the movable sheaves of the pulleys through the linkage mechanism and the cam mechanisms in the shaft direction of the input and output shafts and the rotation between the pulleys is varied in speed by an operation force which is a difference between the pressing forces, and the control motor drives the linkage mechanism of the variable speed pulley mechanism.

The control means performs control based on a control signal from the shift control switch in such a manner that the variable speed mode of the infinitely variable speed transmission can be shifted between two modes, i.e., a semi-automatic mode in which the variable speed ratio of the infinitely variable speed transmission is shifted to a selected one of a plurality of preset variable speed ratios and a full-automatic mode in which the variable speed ratio of the infinitely variable speed transmission is infinitely varied.

In accordance with the above-described arrangement, the control means drive controls the control motor by which the variable speed ratio of the infinitely variable speed transmission is shifted.

At this time, in the variable speed pulley mechanism of the infinitely variable speed transmission, the following will take place. One of the driving side and driven side cam mechanisms is operated by the operation of the control motor through the linkage mechanism. The relative rotation of the rotary and stationary cams of the operated cam mechanism forces the cam follower to move on the variable speed cam faces, and the movable sheave of one of the driving and driven pulleys is moved in the shaft direction. With such movement, the other cam mechanism is operated, and the relative rotation of the rotary and stationary cams of the other cam mechanism forces the cam follower to move on the cam faces. The movement of the movable sheave of the other pulley is opposite to that of the movable sheave of the one pulley in which it is moved toward and away from the stationary sheave. That is, the movable pulleys are moved in opposite directions, which makes a change in pulley ratio between the pulleys. For example when the cam followers are moved on the variable speed cam faces of the cams in the driving side and driven side cam mechanisms toward the low speed side, in the driving pulley the movable sheave moves away from the stationary sheave, whereas in the driven pulley the movable sheave moves toward the stationary sheave. Then the transmission enters the low speed state in which the rotation of the input shaft is decelerated and then transmitted to the output shaft. On the other hand, when the cam followers are moved on the variable speed cam faces of the cams toward the high speed side, the transmission enter the high speed state in which the rotation of the input shaft is accelerated and then transmitted to the output shaft.

Further, in the cam mechanisms, the arrangement of the stationary and movable sheaves of one of the pulleys is opposite to that of the stationary and movable sheaves of the other pulley in relation to the shaft direction and each movable sheave is moved toward and away from the stationary sheave from the rear face side thereof. These cam mechanisms are interlocked together by the linkage mechanism, so that pressing forces from the belt to the pulleys are offset and its remains become a variable speed operation force.

That is, generally, initial tension working on a belt splits into a tight side tension and a slack side tension by rotational torque that is input to a driving pulley, and power transmission from the driving pulley to a driven pulley is carried out by the difference between these tensions. However, belt pressing forces at the pulleys become approximately the same in a static state in which the pulleys do not rotate and in a light load state in which the transmission load is small even when the pulleys are rotating. On the contrary, when the transmission load increases, the belt pressing force on the driving pulley side becomes greater than that on the driven pulley side at all times by the change in tension distribution in the belt, therefore producing a difference therebetween. In accordance with the present invention, the cam mechanism is disposed on the rear face side of the movable sheave of each pulley so that the movable sheave travels in the shaft direction by the relative rotation between the rotary and stationary cams. Belt pressing forces occurring in the pulleys are offset, and by application of a force greater than such a pressing force difference, it becomes possible to perform variable speed operation. Accordingly, as described above, it is sufficient that the variable speed operation force is one in excess of the difference between belt pressing forces occurring in the pulleys. Therefore, the variable speed operation force is reduced considerably not only during low load but also during high load, thereby making it possible to make the control motor small in output and in size.

Additionally, at that time, it is arranged such that transmitting a belt pressing force occurring in one of the pulleys as a belt pressing force occurring in the other pulley is carried out by the cam mechanisms disposed on the rear face side of the movable sheaves of the pulleys, so that the belt pressing force of each pulley can efficiently be converted into a torque for causing the cams of the cam mechanisms to rotate relatively with each other, and further its power transmission line is short and the sliding resistance becomes extremely small. Therefore, the variable speed operation force can be reduced to a further extent.

Furthermore, the shift control switch is operated by a vehicle driver, and based on a control signal from the shift control switch, the variable speed mode by the infinitely variable speed transmission is shifted between two modes, i.e., the semi- and full-automatic modes. When shifted to the semi-automatic mode, the variable speed ratio of the infinitely variable speed transmission is shifted to a selected one of a plurality of preset variable speed ratios, whereas, when shifted to the full-automatic mode, the variable speed ratio of the infinitely variable speed transmission is controlled so as to vary infinitely. As described above, the variable speed mode is shifted between the two modes (the semi- and full-automatic modes). This makes it possible to perform control so that the variable speed ratio of the infinitely variable speed transmission can be varied automatically infinitely. Besides, it is possible to use the infinitely variable speed transmission as if it were a finitely variable transmission. This provides better driving convenience for vehicle sports traveling et cetera, thereby satisfying the likes of a vehicle driver.

The automotive vehicle may be a motor cycle. That is, although motor cycles require higher response to variable speed shifting in comparison with other types of automotive vehicles, in the infinitely variable speed transmission equipped with a variable speed pulley mechanisms by which the driving side cam mechanism and the driven side cam mechanism are interlocked together, the operation force for variable speed shifting is smaller and the shift response is higher. Therefore, such an infinitely variable speed transmission is suitably applicable to motor cycles.

In such a case, it may be arranged such that the shift control switch is positioned at one end of a handle of the vehicle opposite to the other end at which an accelerator grip is provided and the shift control switch is operated by one of hands of a driver of the vehicle opposite to the other hand which performs accelerator operations. As a result of such arrangement, the shift control switch is operated by a hand different from the hand for acceleration operations, therefore ensuring that the occurrence of shift control switch maloperation is avoided.

An indicator means for indicating variable speed positions in the full- and semi-automatic modes by the control means may be provided. Such arrangement allows the driver to easily identify a shift of the variable speed mode, and a variable speed position in the semi-automatic mode, thereby improving driving convenience.

### BRIEF DESCRIPTION OF THE DRAWINGS

Figure **1** is a flowchart diagram showing the operations of signal processing performed for variable speed control in a controller of an embodiment of the present invention.
Figure **2** is a block diagram showing a control system of the embodiment of the present invention.
Figure **3** is an enlarged cross-section of an infinitely variable speed transmission.
Figure **4** is an enlarged front view of a rotary cam of a cam mechanism.
Figure **5** is a top plan view of a handle of a motor cycle.
Figure **6** is diagram showing variable speed characteristics in the semi-automatic mode.
Figure **7** is a diagram showing variable speed characteristics in the full-automatic mode.
Figure **8** is a characteristic diagram showing propulsion produced on the driving side and propulsion produced on the driven side in the infinitely variable speed transmission.

### PREFERRED EMBODIMENT

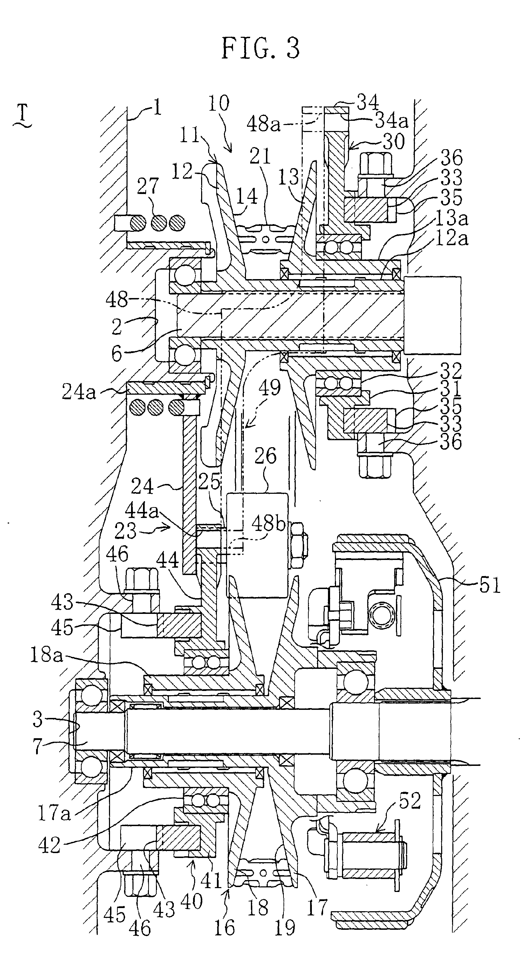

Hereinafter, an embodiment of the present invention will be described with reference to the accompanying drawings. Referring to Figure 3, there is shown a belt infinitely variable speed transmission T according to an embodiment of the present invention. This infinitely variable speed transmission T is mounted on a motor cycle (motorbike). More specifically, the infinitely variable speed transmission T is disposed between an on-vehicle engine (not shown) and a rear wheel as a driving wheel (not shown either), that is, in a power transmission line on the way to the rear wheel through which engine rotational power is transmitted to the rear wheel.

The infinitely variable speed transmission T is of the clutch-containing type and has a casing **1** which is laterally divided into two sections. Formed concavely in a front portion (an upper part in Figure **3**) of a left side wall of the casing **1** is an input shaft receiving hole **2**. An output shaft receiving hole **3** is formed concavely in a rear portion of the casing left side wall.

In the casing **1**, input and output shafts **6** and **7**, spaced apart vertically and extending laterally in parallel with each other, are rotatably supported across the casing **1** (from the right to the left side wall). The left end of the input shaft **6** is rotatably supported in the input shaft receiving hole **2** in the left side wall of the casing **1**, whereas the right end of the input shaft **6** is rotatably supported on the right side wall of the casing **1**. The right end of the input shaft **6** extends outwardly beyond the casing **1** and is drivingly coupled to an output shaft of the engine (not shown).

On the other hand, the left end of the output shaft **7** is rotatably supported in the output shaft receiving hole **3** in the left side wall of the casing **1**, whereas the right end of the output shaft **7** is rotatably supported on the right side wall of the casing **1**. The right end of the output shaft **7** extends outwardly beyond the casing **1** and is drivingly coupled to the rear wheel as a driving wheel (not shown).

Housed in the casing **1** is a variable speed pulley mechanism **10** operable to speed-variably, drivingly connect the input shaft **6** and the output shaft **7** by a V-belt **21.** The variable speed pulley mechanism **10** includes a driving pulley **11** which is disposed on the input shaft **6** and which is a variable speed pulley. The driving pulley **11** is comprised of a flange-like stationary sheave **12** which is spline jointed, at its boss part **12a**, to the input shaft **6** in such a manner that the stationary sheave **12** is rotatable together with the input shaft **6** but not slidable thereover and a flange-like movable sheave **13** which is supported, at its boss part **13a**, slidably and relatively rotatably on the boss part **12a** of the stationary sheave **12** (i.e., on the input shaft **6**) in such a manner that the movable sheave **13** faces the stationary sheave **12** from the right side. Formed between these sheaves **12** and **13** is a belt groove **14** of approximately vee-shaped cross section.

On the other hand, positioned on the output shaft **7** is a driven pulley **16** which is a variable speed pulley having the same diameter as the driving pulley **11.** The driven pulley **16**, which has a structure similar to that of the driving pulley **11**, is comprised of a flange-like stationary sheave **17** which is supported, at its boss part **17a**, on the output shaft 7 in such a manner that the stationary sheave **17** is rotatable together with the output shaft **7** but not slidable thereover and a flange-like movable sheave **18** which is jointed, at its boss part **18a**, slidably and relatively rotatably to the boss part **17a** of the stationary sheave **17** (the output shaft **7**) in such a manner that the movable sheave **18** faces the stationary sheave **17** from the left side in the direction opposite to the direction in which the movable sheave **13** faces the stationary sheave **12** in the driving pulley **11**. Formed between the sheaves **17** and **18** is a belt groove **19** of approximately vee-shaped cross section.

A V-belt **21** such as a block belt is wound around the belt grooves **14** and **19** of the driving and driven pulleys **11** and **16**. The movable sheaves **13** and **18** of the pulleys **11** and **16** are moved toward and away from the stationary sheaves **12** and **17** for changing the belt contact diameter of the pulleys **11** and **16**. For example when the movable sheave **13** of the driving pulley **11** is brought near the stationary sheave **12** and the movable sheave **18** of the driven pulley **16** is moved away from the stationary sheave **17**, the belt contact diameter of the driving pulley **11** becomes greater than that of the driven pulley **16**. This is a high speed (Hi) state in which rotation of the input shaft **6** is accelerated and then transmitted to the output shaft **7**. On the other hand, when the movable sheave **13** of the driving pulley **11** is moved away from the stationary sheave **12** and the movable sheave **18** of the driven pulley **16** is brought near the stationary sheave **17**, the belt contact diameter of the driving pulley **11** is diminished while the belt contact diameter of the driven pulley **16** is increased. This is a low speed (Lo) state in which rotation of the input shaft **6** is decelerated and then transmitted to the output shaft **7.**

Provided in the casing **1** is a tension mechanism **23**. The tension mechanism **23** applies tension to the V-belt **21** by pressing a slack side span of the V-belt **21** from its inside face to the outside (alternatively, from the outside face to the inside), thereby producing a belt pressing force. The slack side span is one of a pair of upper and lower spans of the V-belt **21** stretched between the driving pulley **11** and the driven pulley **16** that becomes slack when engine output power is transmitted toward the rear wheel (the driving wheel), i.e., when power of the input shaft **6** is transmitted to the output shaft **7**. The tension mechanism **23** has, at a boss-like portion of the output shaft receiving hole **3** in the left side wall of the casing **1**, a tension arm **24** which is rotatably, externally fit and supported in a boss part **24a** on the base end side. The base end of a tension shaft **25** extending backwardly in parallel with the input and output shafts **6** and **7** is fixed integrally to the leading end of the tension arm **24**, and the leading end of the tension shaft **25** is positioned laterally correspondingly to the belt grooves **14** and **19** in the pulleys **11** and **16**. Rotatably supported on the leading end of the tension shaft **25** is a tension pulley **26** capable of pressing the slack side span of the V-belt **21** from the inside face. The position of the tension pulley **26** is set such that the tension pulley **26** is, at all times, brought into contact with a portion of the inside face of the V-belt **21**, thereby enabling the tension pulley **26** to press the V-belt **21**, regardless of the movement of the V-belt **21** in the shaft direction caused by variable speed.

Externally fit around the boss part **24a** (which is the boss-like portion of the output shaft receiving hole **3** in the left side wall of the casing **1**) of the tension arm **24** is a return coil spring **27**. One end of the return coil spring **27** is hooked in the base end of the tension arm **24**, whereas the other end of the return coil spring **27** is hooked in the left side wall of the casing **1** around the boss-like portion of the output shaft **3.** The tension arm **24** is energized to rotate in a given direction by spring force by the return coil spring **27**, which causes the tension pulley **26** to press the inside face of a slack side span **31a** of the V-belt **21**. And, the rotational energizing force of the return coil spring **27** that is imparted to the tension arm **24** is set such that the tension pulley **26** presses the slack side span of the V-belt **21** at a tension greater than the maximum tension occurring in the slack side span, and such a tension produces a belt pressing force.

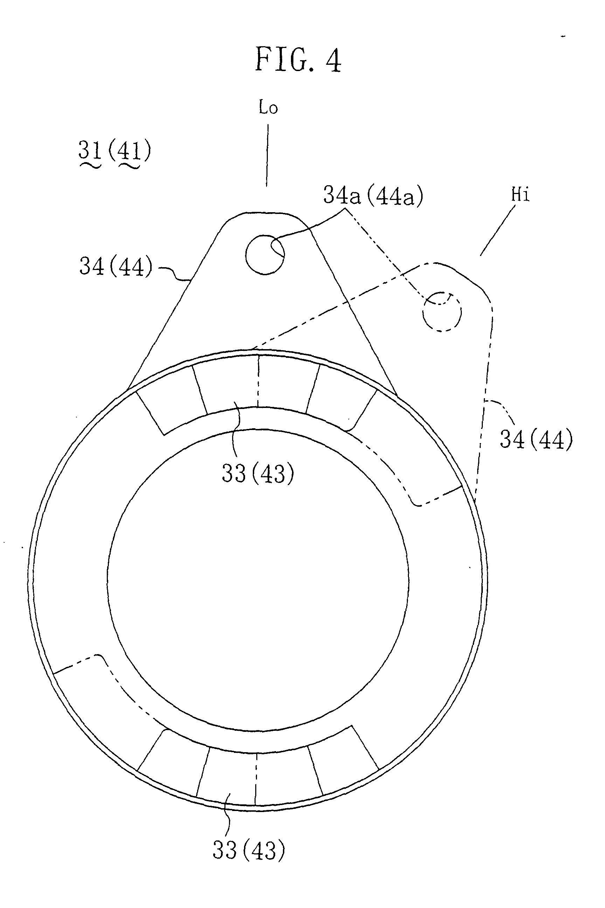

Provided on the input shaft **6** on the rear face side (the right side) of the movable sheave **13** in the driving pulley **11** is a driving side cam mechanism **30** by which the movable sheave **13** is brought near and moved away from the stationary sheave **12**. The cam mechanism **30** includes a rotary cam **31**. The rotary cam **31** is externally fit and supported on the boss part **13a** of the movable sheave **13** through a bearing **32** in such a manner that the rotary cam **31** is relatively rotatable around the input shaft **6** and movable together with the input shaft **6** in the shaft direction. As shown in Figure **4**, a pair of variable speed cam faces **33** and **33** each inclining at a given angle are formed at lower and upper positions of a right end face of the rotary cam **31** opposite to the driving pulley **11**, the lower and upper positions being external to the bearing **32** in the radial direction and being spaced apart from each other at equal angle intervals (180 degrees) in the circumferential direction. Further, a rotary lever **34** is provided, in projecting manner, in the outer circumference of the rotary cam **31** so as to be rotatable together therewith. The rotary lever **34** extends in a direction along a line passing through the variable speed cam faces **33** and **33** (in Figure **3**, for the sake of description, the rotary lever **34** is shown as extending oppositely to the output shaft **7**).

Moreover, arranged at corresponding positions on the rear face side of the rotary cam **31** (the right side ) to the variable speed cam faces **33** and **33** are a pair of cam receiving bearings **35** and **35** serving as cam followers (stationary cams) which are brought into cam contact with the cam faces **33** and **33**. Each cam receiving bearing **35** is supported on a supporting shaft **36** which is arranged and fixed in the inside face of the right side wall of the casing **1** along the radial direction of the input shaft **6**.

On the other hand, provided on the output shaft **7** on the rear face side of the movable sheave **18** in the driven pulley **16** (the left side) is a driven side cam mechanism **40** by which the movable sheave **18** is brought near and moved away from the stationary sheave **17**. The driven side cam mechanism **40** has a structure similar to that of the driving side cam mechanism **30**. The driven side cam mechanism **40** includes a rotary cam **41** which is externally fit and supported on the boss part **18a** of the movable sheave **18** through a bearing **42** in such a manner that the rotary cam **41** is relatively rotatable around the output shaft **7** and movable together with the output shaft **7** in the shaft direction. The rotary cam **41** has the same structure as the rotary cam **31** of the driving side cam mechanism **30** (see Figure **4**). Variable speed cam faces **43** and **43** each inclining at the same angle as the variable speed cam faces **33** and **33** of the driving side cam mechanism **30** are formed at lower and upper positions of the left end face of the rotary cam **41** opposite to the driven pulley **16**, the lower and upper positions being external to the bearing **42** in the radial direction and being spaced apart from each other at equal angle intervals (180 degrees) in the circumferential direction. Further, a rotary lever **44** is provided, in projecting manner, in the outer circumference of the rotary cam **41** so as to be rotatable together therewith. The rotary lever **44** extends in a direction along a line passing through the variable speed cam faces **43** and **43**, that is, in the same direction that the rotary lever **34** of the driving side cam mechanism **30** extends (in Figure **3**, for the sake of description the rotary lever **44** is shown as extending toward the input shaft **6**).

Further, arranged on the rear face side of the rotary cam **41** (the left side) are a pair of cam receiving bearings **45** and **45** serving as cam followers (stationary cams) which are brought into cam contact with the variable speed cam faces **43** and **43**. Each cam receiving bearing **45** is supported on a supporting shaft **46** which is arranged and fixed in the inside face of the left side wall of the casing **1** along the radial direction of the output shaft **7**.

Furthermore, the leading end of the rotary lever **34** in the outer circumference of the rotary cam **31** of the driving side cam mechanism **30** and the leading end of the rotary lever **44** in the outer circumference of the rotary cam **41** of the driven side cam mechanism **40** are coupled together by a link **48** so as to rotate in association with each other.

The link **48** is formed of a plate material whose intermediate portion bends in a curve in approximately horizontal plane, and a front side pin aperture **48a** and a rear side pin aperture **48b** are formed through the front and rear ends of the link **48**, respectively, extending in parallel with the input and output shafts **6** and **7**. Further, a pin aperture **34a** is formed, in parallel with the input shaft **6**, through the leading end of the rotary lever **34** of the rotary cam **31** of the driving side cam mechanism **30**, whereas a pin aperture **44a** is formed, in parallel with the output shaft **7**, through the leading end of the rotary lever **44** of the driven side cam mechanism **40**. A link pin (not shown) is driven through the pin aperture **34a** in the leading end of the rotary lever **34** and then through the front side pin aperture **48a** of the link **48**, and a link pin (not shown) is driven through the pin aperture **44a** in the leading end of the rotary lever **44** and then through the rear side pin aperture **48b** of the link **48**. As a result, the link **48** and the leading ends of the rotary levers **34** and **44** are coupled together rockably.

The rotary levers **34** and **44**, the front and rear link pins and the link **48** together constitute a linkage mechanism **49**. The linkage mechanism **49** links together the rotary cams **31** and **41** of the cam mechanism **30** and **40** so that they rotate around the boss parts **13a** and **18a** of the movable sheave **13** and **18**. The cam receiving bearings **35** and **45** are rolled on the variable speed cam faces **33** and **43**, respectively, to cause the movable sheaves **13** and **18** of the pulleys **11** and **16** to travel in the shaft direction. As a result, the movable sheaves **13** and **18** are brought near and moved away from the stationary sheaves **12** and **17**, thereby making the effective radius of the belt grooves **14** and **19**, i.e., the belt contact diameter of the pulleys **11** and **16**, variable, and the pulley ratio between the pulleys **11** and **16**, i.e., the variable speed ratio of the infinitely variable speed transmission T, is changed. Further, the variable speed pulley mechanism **10** is configured so that the belt **21** and each of the movable sheaves **13** and **18** of the pulleys **11** and **16** are pressed against each other through the linkage mechanism **49** and the cam mechanisms **30** and **40** in the shaft direction of the input and output shafts **6** and **7**, and the rotation between the pulleys **11** and **16** is varied in velocity by an operation force which is the difference between the pressing forces.

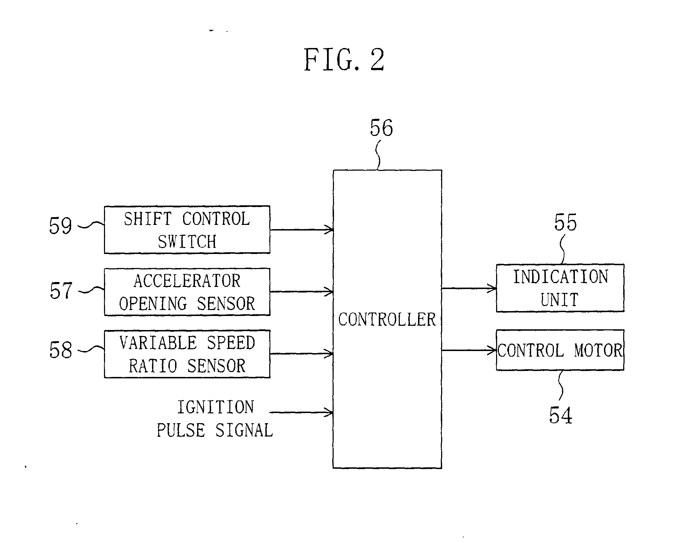

For example the link **48** of the linkage mechanism **49** (or the rotary levers **34** and **44**) is drivingly coupled, through a coupling drive mechanism (not shown), to the output shaft of a control motor **54** (see Figure **2**) which is an electric motor capable of reciprocal rotation. The control motor **54** is positioned outside the casing **1**. The linkage mechanism **49** is moved for switching by the control motor **54** and the rotary levers **34** and **44**, provided, in projecting manner, on the rotary cams **31** and **41**, are rocked around the input and output shafts **6** and **7** between Lo and Hi positions (see Figure **4**) to change the pulley ratio of the variable speed pulley mechanism **10,** whereby the output shaft **7** is switched to a deceleration or an acceleration state with respect to the input shaft **6** for variable speed.

A clutch disk **51** is spline connected to the right end of the output shaft **7** within the casing **1** in such a manner that the clutch disk **51** is rotatable together with the output shaft **7**. The clutch disk **51** is linked, through a clutch device **52** of the centrifugal type, to the stationary sheave **17** of the driven pulley **16**.

As shown in Figure **2**, the operation of the control motor **54** is controlled by a controller **56** having a CPU. The controller **56** also controls the operation of an indication unit **55**. The controller **56** is fed these signals: an output signal from an accelerator opening sensor **57** formed of a potentiometer capable of detecting an accelerator opening (accelerator position) of the motor cycle; an output signal from a variable speed ratio sensor **58** formed of a potentiometer capable of detecting a variable speed ratio in the infinitely variable speed transmission T from for example a rotational position of the output shaft of the control motor **54** (or a shift position of the coupling drive mechanism or linkage mechanism **49**); an engine ignition pulse signal for detecting the number of engine revolutions; and a signal from a shift control switch **59** that is operated for shifting by the driver.

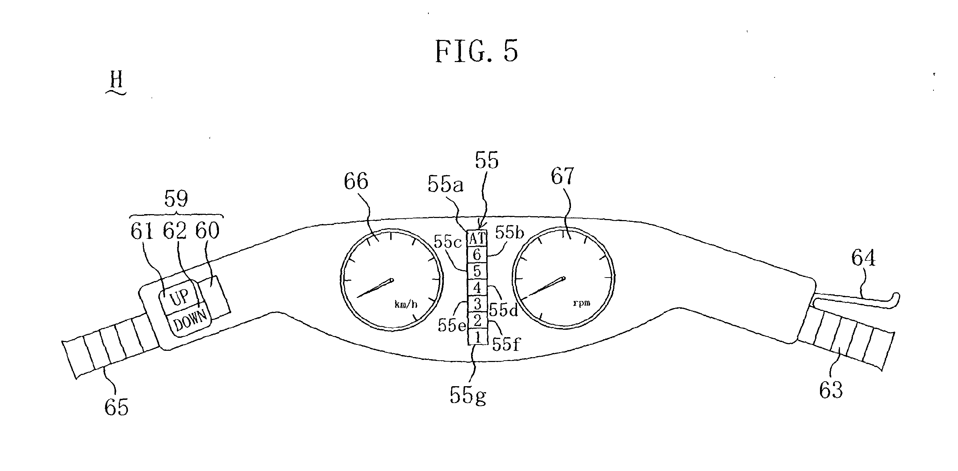

Referring now to Figure **5**, there is illustrated a handle of the motor cycle. A accelerator grip **63** (throttle grip) is rotatably attached to the right end of a handle H. A front brake lever **64** is rockably supported in front of and interior to the accelerator grip **63** (the center side of the handle H).

On the other hand, provided at the left end of the handle H is a left side grip **65**. Provided at a position of the handle H interior to and in the vicinity of the left side grip **65** is the shift control switch **59**. That is, the shift control switch **59** is positioned at the left end of the handle H opposite to the right end of the handle H where the accelerator grip **63** is positioned. The shift control switch **59** is operable by the left hand opposite to the right hand by which the accelerator grip **63** is gripped for acceleration operations. The shift control switch **59** is comprised of a mode shift switch **60** of the button pushing type for the shifting of variable speed modes, a shift-up switch **61** of the button pushing type, and a shift-down switch **62**. These switches **61** and **62** are arranged side by side on the left side of the mode shift switch **60**. In the shift mode of a semi-automatic mode, the switch **61** performs variable speed range upshifting, whereas the switch **62** performs variable speed range downshifting. The shift-up switch **61** is positioned above the shift-down switch **62**. Further, when pressed down, the mode shift switch **60** alternately outputs a full-automatic mode shift signal and a semi-automatic mode shift signal.

Moreover, the indication unit **55** is installed at the mid part of the handle H. The indication unit **55** constitutes an indication means. The indication unit **55** indicates variable speed positions in the full- and semi-automatic modes by the controller **56**. More specifically, the indication unit **55** is comprised of "AT" indication lamp **55a** and variable speed range indication lamps **55b-55g** for the indication of six variable speed ranges from "6" to "1" which are arranged vertically in a row. The "AT" indication lamp **55a** lights up in the full-automatic mode. On the other hand, in the semi-automatic mode, a corresponding one of the six variable speed range indicator lamps **55b-55g** to a variable speed ratio of the infinitely variable speed transmission T lights up. In the handle H, a speed meter **66** is installed on the left side of the indication unit **55** and a tachometer **67** is installed on the right side.

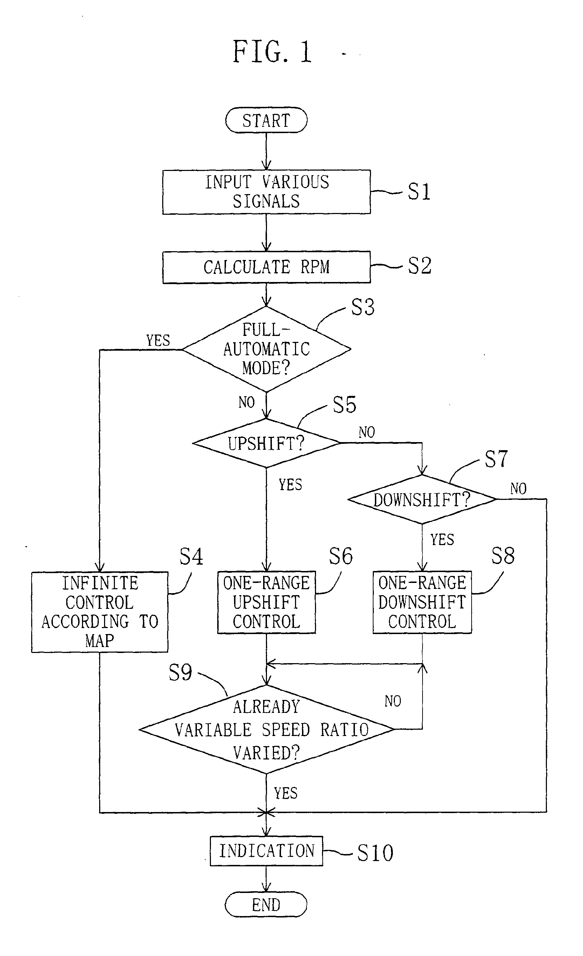

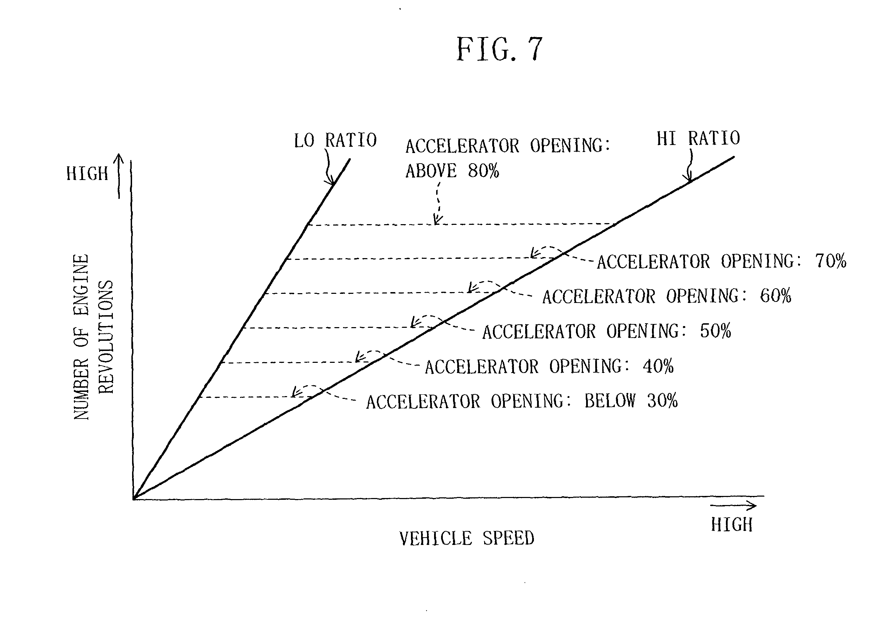

By virtue of the controller **56**, shifting between two different modes, i.e., between the semi-automatic mode in which the variable speed mode by the infinitely variable speed transmission T is shifted to a selected one of the six preset variable speed ratios of the infinitely variable speed transmission T and the full-automatic mode in which the variable speed ratio of the infinitely variable speed transmission T varies infinitely. That is, signal processing operations for variable speed control of the infinitely variable speed transmission T carried out in the controller **56** will be described with reference to a flowchart diagram of Figure **1**. In a first step S1, the controller **56** inputs signals from the sensors **57** and **58** and from the shift control switch **59** and an engine ignition pulse signal. In a step S2, an actual number of engine revolutions is calculated from the ignition pulse signal. Next, in a step S3, based on the signal from the shift control switch **59**, it is decided whether the full-automatic mode is selected as a variable speed mode by the operation of the mode shift switch **60**. If the decision made is YES (which means that the full-automatic mode is demanded by the driver as the variable speed mode), the procedure proceeds to a step S4. A control signal is output to the control motor **54** so that the variable speed ratio of the infinitely variable speed transmission T varies infinitely. Thereafter, the procedure proceeds to a step S10. In control of infinitely varying variable speed ratios, as shown in Figure **7**, target engine revolutions are preset, in the form of a map, according to accelerator openings. The variable speed ratio of the infinitely variable speed transmission T is controlled such that an actual number of engine revolutions agrees with a target number of engine revolutions read out of the map.

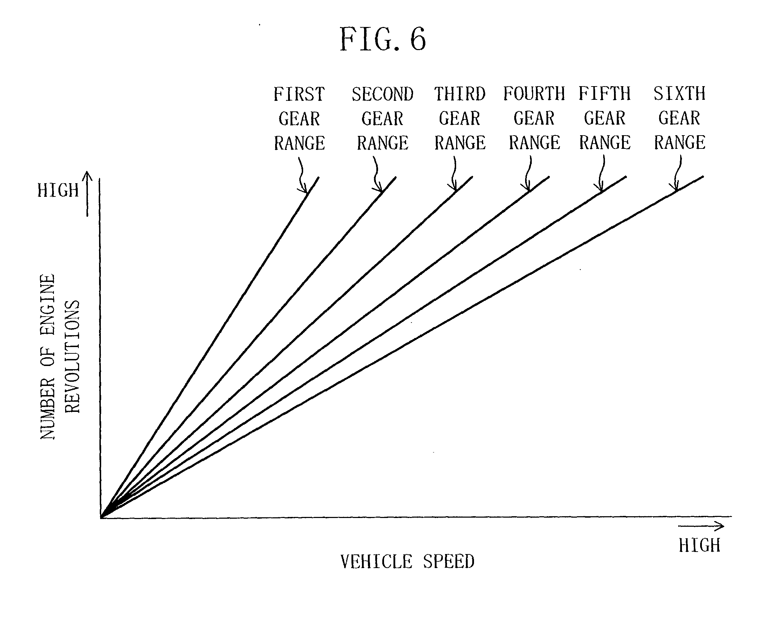

If the decision made in the step S3 is NO (which means that the semi-automatic mode is demanded as a variable speed mode), then the procedure proceeds to steps S5-S9 for execution of the semi-automatic mode. First, in the step S5, it is decided whether variable speed range upshifting is required by the operation of the shift-up switch **61**. If the decision made is YES, the procedure proceeds to the step 6. As shown in Figure **6**, from among the six preset variable speed ratios of the infinitely variable speed transmission T, a variable speed ratio, which is higher than a currently-selected one by one gear range, is selected and a control signal is output to the control motor **54** so that the variable speed range is upshifted one gear range to the ratio selected. Thereafter, the procedure proceeds to the step S9.

On the other hand, if the decision made in the step S5 is NO, then the procedure proceeds to the step S7 to decide whether variable speed range downshifting is required by the operation of the shift-down switch **62**. If the decision made is YES, the procedure proceeds to the step S8 at which, from among the six preset variable speed ratios of the infinitely variable speed transmission T, a variable speed ratio, which is lower than a currently-selected one by one gear range, is selected and a control signal is output to the control motor **54** so that the variable speed range is downshifted one gear range to the ratio selected. Thereafter, the procedure proceeds to the step S9.

If the decision made in the step S7 is NO, this is decided such that neither the shift-up switch **61** nor the shift-down switch **62** is operated (that is, neither a variable speed range upshifting nor a variable speed range downshifting is required). The procedure automatically proceeds to the step S9.

In the step S9, it is decided whether the variable speed ratio of the infinitely variable speed transmission T has been shifted to the target variable speed ratio from the output signal of the variable speed ratio sensor **58**. If the decision made is YES, then the procedure proceeds to a step S10. In the step S10, a corresponding one of the plural indication lamps **55a-55g** of the indication unit **55** to the target ratio is lighted up to indicate a current variable speed condition. Thereafter, the procedure is completed.

Next, the operation of the aforesaid embodiment will be described. The output shaft of the on-vehicle engine is drivingly coupled to the input shaft **6** of the infinitely variable speed transmission T and the output shaft **7** of the transmission T is coupled to the rear wheel (driving wheel), as a result of which arrangement engine rotational power is varied in the transmission T and thereafter is transmitted to the rear wheel. The rotary levers **34** and **44** of the driving and driven side cam mechanisms **30** and **40** of the transmission T are connected together by the link **48** and the link **48** is drivingly coupled, through the coupling driving mechanism, to the output shaft of the control motor **54**, as a result of which arrangement the pulley ratio of the variable speed pulley mechanism **10** is changed by the driving of the control motor **54** thereby to change the variable speed ratio of the transmission T.

The operation of the infinitely variable speed transmission T will be described in detail. For example when the variable speed ratio of the transmission T is lowered down to Lo (low speed condition), the rotary lever **34** in the outer circumference of the rotary cam **31** of the driving side cam mechanism **30** in the variable speed pulley mechanism **10**, is driven by the control motor **54** through the link **48** and placed in the position of Lo. Since the rotary lever **34** in the outer circumference of the rotary cam **31** is connected to the rotary lever **44** in the outer circumference of the rotary cam **41** in the driven side cam mechanism **40** by the link **48**, the rotary lever **44** also rotates when the rotary lever **34** rotates to the Lo position. In such a state that the position of the rotary lever **44** is changed to the Lo position, the rotary cam **41** of the driven side cam mechanism **40** pivots in the low speed direction (in one direction) around the boss part **18a** of the movable sheave **18** and the cam receiving bearing **45** rolls over each variable speed cam face **43** of the rotary cam **41** to move to the low speed side. Because of the movement of the cam receiving bearing **45** over the variable speed cam faces **43** toward the low speed side, each variable speed cam face **43** is pushed by the cam receiving bearing **45** and, as a result, the rotary cam **41** moves on the sleeve **13** around the output shaft **7** toward the right side (toward the driven pulley **16**), and the movable sheave **18** movable together with the cam **41** through the bearing **42** moves in the same direction. The movable sheave **18** is brought near the stationary sheave **17**. This forces the driven pulley **16** to close and its belt contact diameter increases. By such an increase in belt contact diameter, the V-belt **21** is drawn toward the driven pulley **16**.

At the same time, when the position of the rotary lever **44** is changed to the Lo position, the rotary cam **31** of the driving side cam mechanism **30** pivots on the input shaft **6** in the same low speed direction (in one direction) that the cam **41** of the driven side cam mechanism **40** pivots. When the cam **31** pivots, this causes the cam receiving bearing **35** to move toward the low speed side of each variable speed cam face **33** and, as a result, the cam receiving bearing **35** no longer presses the variable speed cam faces **33**. Because of this, by the tension of the belt **21** moving toward the driven side pulley **16**, in synchronization with the movement of the movable sheave **18** of the driven pulley **16**, the cam **31** and the movable sheave **13** coupled to the cam **31** through the bearing **32** travel over the input shaft **6** to the right (in the direction that they move away from the stationary sheave **12**). The movable sheave **13** moves away from the stationary sheave **12**, which forces the driving pulley **11** to open and its belt contact diameter is diminished. Consequently, the belt contact diameter of the driven pulley **16** becomes greater than that of the driving pulley **11** and the rotation of the input shaft **6** is decelerated and then transmitted to the output shaft **7**. Because of this, the transmission T enters the Lo state, and the rotation of the engine **1** is decelerated and then transmitted to the driving wheels **2** and **2**.

The energizing force of the return coil spring **27** of the tension mechanism **23** energizes the tension arm **24** to rotate, and the tension pulley **26** at the leading end of the tension arm **24** presses the inside face of the slack side span of the belt **21**, thereby applying tension to the belt **21**. At this time, the tension thus applied is greater than the maximum tension occurring in the slack side span, thereby creating the wedge effect of the belt **21** with respect to the pulleys **11** and **16**, and a belt pressing force is produced. By such a pressing force, power is transmitted between the pulleys **11** and **16** through the belt **21**.

On the other hand, when the position of the rotary lever **34** is changed to the Hi position opposite to the Lo position, in such a Hi state the rotary cam **31** of the driving side cam mechanism **30** pivots around the boss part **13a** of the movable sheave **13** in the driving pulley **11** in the high speed direction (in the other direction), and the cam receiving bearing **35** travels, while rolling over each variable speed cam face **33** of the rotary cam **31**, toward the high speed side. More specifically, when the cam receiving bearing **35** moves toward the high speed side of the variable speed cam faces **33**, each variable speed cam face **33** is pushed by the cam receiving bearing **35** and the rotary cam **31** moves over the input shaft **6** to the left (toward the driving pulley **11**), and the movable sheave **13** movable together with the cam **31** moves in the same direction to approach the stationary sheave **12**. This causes the driving pulley **11** to close and its belt contact diameter increases. By such an increase in belt contact diameter, the V-belt **21** is drawn toward the driving pulley **11**.

At the same time, the rotary cam **41** of the driven side cam mechanism **40** pivots on the sleeve **13** in the same high speed direction (in the other direction) that the cam **31** of the driving side cam mechanism **30** does. When the cam **41** pivots, this causes the cam receiving bearing **45** to move toward the high speed side of each variable speed cam face **43** and, as a result, the cam receiving bearing **45** no longer presses the variable speed cam faces **43**. Because of this, by the tension of the belt **21** moving toward the driving pulley **11**, the cam **41** and the movable sheave **18** coupled to the cam **41** through the bearing **42** travel on the sleeve **13** to the left (in the direction that they move away from the stationary sheave **17**). The movable sheave **18** moves away from the stationary sheave **17**, which causes the driven pulley **16** to open and its belt contact diameter is diminished. Consequently, the belt contact diameter of the driving pulley **11** becomes greater than that of the driven pulley **16**, and the rotation of the input shaft **6** is accelerated and then transmitted to the output shaft **7**. Because of this, the transmission T enters the Hi state, and the rotation of the engine **1** is accelerated and then transmitted to the driving wheels **2** and **2**.

In the present embodiment, the driver of the motor cycle operates the shift control switch **59** and the variable speed mode of the infinitely variable speed transmission T is switched, by the mode shift switch **60** of the shift control switch **59**, between two modes, i.e., the semi-automatic mode and the full-automatic mode. When switched to the full-automatic mode, the variable speed ratio of the infinitely variable speed transmission T is so controlled as to vary infinitely. That is, a target number of engine revolutions corresponding to an accelerator opening detected by the accelerator opening sensor **57** is read out of the map and the variable speed ratio is controlled such that an actual number of engine revolutions calculated from an ignition pulse signal becomes the target number of engine revolutions.

On the other hand, when switched to the semi-automatic mode, in response to the operation of the shift-up switch **61** or shift-down switch **62** the variable speed ratio of the infinitely variable speed transmission T is so selected as to be one of the six preset variable speed ratios. More specifically, when the shift-up switch **61** is in operation, the controller **56** sends a control signal to the control motor **54** so that a variable speed ratio, which is higher than a currently-selected one by one gear range, is selected from among the six preset variable speed ratios, whereby the variable speed range is upshifted one gear range. On the other hand, when the shift-down switch **62** is in operation, the controller **56** sends a control signal to the control motor **54** so that a variable speed ratio, which is lower than a currently-selected one by one gear range, is selected from among the six preset variable speed ratios, whereby the variable speed range is downshifted one gear range.

Accordingly, owing to such shifting in variable speed mode between the two modes (i.e., the semi-automatic mode and the full-automatic mode), it becomes possible to control the infinitely variable speed transmission T such that its variable speed ratio is automatically infinitely varied. Apart from this, it is possible to use the infinitely variable speed transmission T as if it were a finite variable speed transmission. Such finite variable transmission control improves for example sports traveling performance for motor cycles, thereby satisfying the likes of drivers.

Further, each of variable speed position in the full- and semi-automatic modes by the operation of the controller **56** are indicated by the indication unit **55** in the center of the handle H. This allows the driver to easily identify a current variable speed mode shift state and a current variable speed position in the semi-automatic mode, thereby improving driving convenience.

Furthermore, in the present embodiment, the shift control switch **59** is positioned at the left end of the handle H of the motor cycle opposite to the right end of the handle H where the accelerator grip **63** is positioned. Therefore, the shift control switch **59** is operated by the left hand opposite to the right hand for accelerator operations. In the case the shift control switch is operated with the right hand, acceleration operations by the accelerator grip **63** and braking operations by the brake lever **64** must be done also with the same right hand. However, in accordance with the present invention, the shift control switch is arranged to be operated by the left hand, therefore positively ensuring that the driver is free from maloperation of the shift control switch **59**.

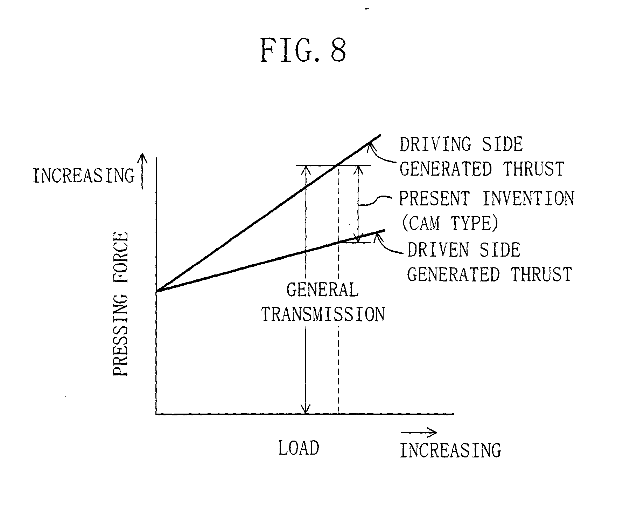

Moreover, in the present embodiment, the stationary and movable sheaves **12** and **13** of the pulley **11** are positioned reversedly to the stationary and movable sheaves **17** and **18** in the variable speed pulley mechanism **10** in relation to the shaft direction, and the cam mechanisms **30** and **40** are provided which cause the movable sheaves **13** and **18** to move toward and away from the stationary sheaves **12** and **17** facing the sheaves **13** and **18**, from the rear side. These cam mechanisms **30** and **40** are linked together by the linkage mechanism **49**. Therefore, as shown in Figure **8**, pressing forces (thrust forces) imparted from the belt **21** to the pulleys **11** and **16** are offset and its remains become a variable speed operation force. In this way, it is sufficient that the variable speed operation force is one in excess of the difference between belt pressing forces occurring in the pulleys **11** and **16**. During low load, and of course during high load, the variable speed operation force can be reduced considerably and the control motor **54** can therefore be small in output as well as in dimensions.

Besides, at that time, transmitting a belt pressing force occurring in one of the pulleys (the pulley **11** or pulley **16**) as a belt pressing force occurring in the other pulley is carried out by the cam mechanisms **30** and **40**, whereby the belt pressing forces of the pulleys **11** and **16** can efficiently be converted into a torque for relative rotation of the rotary cams **31** and **41** and the cam receiving bearings **35** and **45** of the cam mechanisms **30** and **40**, and the length of a power transmission line for such transmission is short and the sliding resistance becomes extremely small, therefore reducing the variable speed operation force to a further extent.

The rotary cams **31** and **41** of the cam mechanisms **30** and **40** are supported, through the bearings **32** and **42**, on the boss parts **13a** and **18a** of the movable sheaves **13** and **18** in the pulleys **11** and **16**, and the rotary levers **34** and **44** in the outer circumference of the rotary cams **31** and **41** are linked together by the link **48**. Therefore, during variable speed shifting of the variable speed pulley mechanism **10**, a force acts on the variable speed cam faces **33** and **43** in the rotary cams **31** and **41** at right angles to these cam faces **33** and **43** from the cam receiving bearings **35** and **45** supported on the left and right side walls of the casing **1**, respectively. And, when a normal component force of the force orthogonal to the input and output shafts **6** and **7** acts perpendicularly to a line connecting the shaft center of the input and output shafts **6** and **7** and a linking point to the link **48**, a cam rotation reaction force (which is at right angles to the line, regardless of the change in pulley ratio), acts in opposition to the normal component force, and causes the rotary cams **31** and **41** to rotate about the linking point), is produced by the normal component force, because the rotary cams **31** and **41** are restrained from moving by being linked to the link **48**. The cam rotation reaction force acts on the boss parts **13a** and **18a** of the movable sheaves **13** and **18** on which the rotary cams **31** and **41** are supported so that, in a plane passing through the central position of a range that the belt **21** is wound around each pulley **11** and **16** (the position deviated 90 degrees in phase from the linking point to the link **48**) and the center of the boss parts **13a** and **18a**, the boss parts **13a** and **18a** are pressed toward the center of the input and output shafts **11** and **12** from one of the sides opposite to the diameter direction of the boss parts **13a** and **18a**. That is, the cam rotational reaction force to the boss parts **13a** and **18a** acts in such a way that, at a clearance in a sliding portion of the boss parts **13a** and **18a** and the input and output shafts **6** and **7**, when the movable sheaves **13** and **18** are given a pressing force from the belt **21**, a moment is produced, which is in a direction opposite to a moment working in a direction of inclining the movable sheaves **13** and **18** with respect to the input and output shafts **6** and **7** and which causes the boss parts **13a** and **18a** to be in parallel with the input and output shafts **11** and **12.** The original moment is offset by such a moment and diminishes. The distribution of surface pressures of the inner circumference of the boss parts **13a** and **18a** of the movable sheaves **13** and **18** with respect to the outer circumference of the input and output shafts **6** and **7** disperses in the shaft center direction and the sliding resistance of the boss parts **13a** and **18a** decreases. By the amount that the sliding resistance decreases, the load that a belt generation pressing force imparts to a fixed point by the rotary cams **31** and **41** (i.e., a taken-out pressing force) increases, in other words, a belt generation pressing force is transmitted, as taken-out pressing force, to the rotary cams **31** and **41** without undergoing great resistance. The difference between belt generation pressing force and taken-out pressing force is a load (operation force) required for variable speed operation when varying pulley ratios and, therefore, as the taken-out pressing force increase, the operation force required decreases. As a result, the variable speed operation force can be reduced to a further extent by pressing force balancing of the belt **21** between the pulleys **11** and **16** in the variable speed pulley mechanism **10**.

The transmission T can be applied suitably even to motor cycles that require higher response to variable speed shifting.

The foregoing embodiment is an example in which the present invention is applied to a motor cycle, but the present invention is also applicable to other than motor cycles.

## Claims

1. A variable speed control apparatus for an automotive vehicle, comprising:
an infinitely variable speed transmission disposed in a power transmission line en route from an on-vehicle engine to a driving wheel;
a control motor, implemented by an electric motor, for shifting the variable speed ratio of said infinitely variable speed transmission;
control means for controlling said control motor; and
a shift control switch which is operated by a driver of said vehicle;
said infinitely variable speed transmission includes:
an input shaft drivingly connected to said engine;
an output shaft drivingly connected to said driving wheel; and
a variable speed pulley mechanism having: a driving and driven pulleys comprised of a pair of variable speed pulleys which are arranged and supported on said input shaft and on said output shaft, respectively, wherein stationary and movable sheaves of said driving pulley are positioned reversedly to stationary and movable sheaves of said driven pulley; a V-belt wound between said driving and driven pulleys; a driving side and driven side cam mechanisms disposed on the rear face sides of said movable sheaves of said pulleys and having rotary cams relatively rotatably connected to said movable sheaves, and stationary cams which are brought into cam contact with said rotary cams wherein a variable speed cam face is formed in one of said rotary and stationary cams and the other cam serves as a cam follower which is brought into contact with said variable speed cam face and wherein the belt contact diameter of each said pulley is varied by moving said movable sheave toward and away from said stationary sheave disposed face to face with said movable sheave by relative rotary motion of said rotary and stationary cams; a linkage mechanism for interlocking said cam mechanisms so that the belt contact diameters of said pulleys are varied in opposite directions to cause the pulley ratio between said pulleys to vary; and a tension mechanism for pressing, through a tension pulley, one of belt spans of said V-belt between said pulleys that becomes a slack side span when engine output power is transmitted toward said driving wheel at a tension greater than a tension produced in said slack side span correspondingly to the pulley ratio between said pulleys, wherein said V-belt exerts respective pressing forces to press said movable sheaves of said pulleys through said linkage mechanism and said cam mechanisms in the shaft direction of said input and output shafts and the rotation between said pulleys is varied in speed by an operation force which is a difference between said pressing forces;
wherein said control motor drives said linkage mechanism of said variable speed pulley mechanism; and
wherein said control means performs control based on a control signal from said shift control switch in such a manner that the variable speed mode of said infinitely variable speed transmission can be shifted between two modes, i.e., a semi-automatic mode in which the variable speed ratio of said infinitely variable speed transmission is shifted to a selected one of a plurality of preset variable speed ratios and a full-automatic mode in which the variable speed ratio of said infinitely variable speed transmission is infinitely varied.

2. The automotive vehicle variable speed control apparatus of claim 1, wherein said automotive vehicle is a motor cycle.

3. The automotive vehicle variable speed control apparatus of claim 2, wherein said shift control switch is positioned at one end of a handle of said vehicle opposite to the other end at which an accelerator grip is provided and wherein said shift control switch is operable by one of hands of a driver of said vehicle opposite to the other hand which performs accelerator operations.

4. The automotive vehicle variable speed control apparatus of any one of claims 1 through 3, wherein indication means for indicating variable speed positions in said full- and semi-automatic modes by said control means is provided.
